# EUROPÄISCHE PATENTSCHRIFT

(11) **EP 1 997 544 B1**
(45) Veröffentlichungstag und Bekanntmachung des Hinweises auf die Patenterteilung: **21.11.2018**
(21) Anmeldenummer: 07010558.0
(22) Anmeldetag: 26.05.2007
(51) Int. Cl.: B01D 1/26, B01D 9/00

(54) **EINDAMPFVERFAHREN**
EVAPORATION PROCEDURE
PROCÉDÉ D'ÉVAPORATION

(43) Veröffentlichungstag der Anmeldung: 03.12.2008
(73) Patentinhaber: Ebner, Stefan, 61440 Oberursel/Taunus (DE)
(72) Erfinder: Ebner, Stefan, 61440 Oberursel/Taunus (DE)
(74) Vertreter: Köster, Hajo

(56) Entgegenhaltungen:
- WO-A-02/48046
- US-A- 2 330 221
- US-A- 4 160 812

## Beschreibung

Die Erfindung betrifft ein Verfahren zum Eindampfen und/oder zum Abkühlen der aus einer Hauptanlage in Form einer Eindampfanlage oder Eindampfkristallisationsanlage mit mechanischer Brüdenkompression ablaufenden heißen Mutterlösung, bei dem die heiße Mutterlösung entspannt wird, und eine Anlage zum Eindampfen und/oder zum Abkühlen einer derartigen heißen Mutterlösung mit einem Entspannungsverdampfer.

In Eindampfanlagen oder Eindampfkristallisationsanlagen mit mechanischer Brüdenkompression, die im Rahmen der vorliegenden Anmeldung als Hauptanlage bezeichnet sind, wird versucht, den Einsatz von zusätzlicher Heizenergie in Form von Frischdampf zu minimieren. Um dieses Ziel zu erreichen, wird die Frischlösung, welche der Hauptanlage zugeführt werden soll, durch Energien, welche an anderen Stellen in der Fabrik, in der sich die Hauptanlage befindet, vorhanden ist und/oder durch das aus der Hauptanlage austretende heiße Brüdenkondensat vorgewärmt. Dies führt zu einem minimalen zusätzlichen Energieverbrauch in der Hauptanlage.

Das Dokument WO0248046 offenbart eine Kristallisationsanlage mit einer Reihe von Verdampfer.

Ab einem bestimmten Verhältnis zwischen Eindampfleistung und Menge der zugeführten Frischlösung lässt sich der zusätzlich Dampfverbrauch bis auf null reduzieren. Es ist sogar möglich, in der Hauptanlage für mechanische Brüdenkompression überschüssige Energie zu erhalten.

Dies hat zur Konsequenz, dass die aus der Hauptanlage ablaufende heiße Mutterlösung nicht mehr für Vorwärmzwecke benötigt wird. Diese heiße Mutterlösung läuft entweder heiß ab, wird durch Kühlwasser oder andere Medien gekühlt oder wird in nur einer Stufe entspannt, um die gewünschte Abkühltemperatur zu erhalten.

Diente die Hauptanlage mit mechanischer Brüdenkompression zur Kristallisation von Salzen, dann sinken in der ablaufenden Mutterlösung die Löslichkeiten der Inhaltsstoffe. Daher wird die heiße Ablauflösung beziehungsweise Mutterlösung aus der Hauptanlage mit mechanischer Brüdenkompression vorzugsweise zur Abkühlung entspannt, da diese Lösung in Wärmetauschern aufgrund der Versalzungsgefahr nicht mehr genutzt werden kann. Der bei der dieser bekannten Entspannung frei werdende Brüdendampf kann teilweise zur Vorerwärmung von kalter Frischlösung oder ähnlichem eingesetzt werden oder wird direkt in einem Misch- oder Oberflächenkondensator durch Kühlwasser niedergeschlagen.

Aufgabe der vorliegenden Erfindung ist es, ein Verfahren beziehungsweise eine Anlage zum Eindampfen und/oder zum Abkühlen der aus einer Hauptanlage mit mechanischer Brüdenkompression ablaufenden heißen Mutterlösung bereitzustellen, bei dem beziehungsweise bei der eine zusätzliche Eindampfleistung beziehungsweise im Fall von Eindampfkristallisationsanlagen außerdem eine zusätzliche Kristallausbeute erzielt wird.

Gelöst wird diese Aufgabe durch die Lehre der unabhängigen Ansprüche.

Die Erfindung wird im folgenden und unter Bezug auf das erfindungsgemäße Verfahren näher erläutert, wobei diese Darlegungen analog für die erfindungsgemäße Anlage gelten, sofern nichts anderes angegeben ist. Erfindungsgemäß erfolgt die Entspannung der heißen Mutterlösung nicht in lediglich einer Entspannungsstufe, wie das beim Stand der Technik der Fall ist, sondern in mehreren Stufen. Der in mindestens einer Entspannungsstufe erhaltene Brüdendampf wird zumindest teilweise zum Heizen derjenigen Lösung eingesetzt, die der sich anschließenden Entspannungsstufe zugeführt und dort entspannt wird.

Nach einer bevorzugten Ausführungsform wird der ab der 1. Entspannungsstufe bis zur vorletzten Entspannungsstufe erhaltene Brüdendampf jeweils zumindest teilweise zum Heizen derjenigen Lösung eingesetzt, die in der sich anschließenden Entspannungsstufe entspannt wird. Umfasst das erfindungsgemäße Verfahren beispielsweise vier Entspannungsstufen, dann bedeutet dies im Einzelnen, dass der in der 1. Entspannungsstufe erhaltene Brüdendampf zumindest teilweise zum Heizen derjenigen Lösung eingesetzt wird, die in der 2. Entspannungsstufe entspannt wird. Der in der 2. Entspannungsstufe erhaltene Brüdendampf wird zum Heizen derjenigen Lösung eingesetzt, die in der dritten Entspannungsstufe entspannt wird. Der in der dritten Entspannungsstufe erhaltene Brüdendampf wird zumindest teilweise zum Heizen derjenigen Lösung eingesetzt, die in der vierten Entspannungsstufe entspannt wird. Analoges gilt, wenn die Zahl der Entspannungsstufen reduziert oder erhöht wird.

Durch die stufenweise Entspannung der heißen Ablauflösung beziehungsweise Mutterlösung und durch die Verwendung der dabei frei werdenden Energie in der nächsten Entspannungsstufe als Heizdampf wird erreicht, dass die ohnehin durch die Abkühlung entstehende Verdampfungsmenge beträchtlich erhöht wird. Mit anderen Worten, es kommt zu einer Zusatzverdampfung, für die keine Zusatzenergie in Form von elektrischer Energie, Frischdampfenergie oder ähnlichem notwendig wird. Dadurch kann einerseits der spezifische Energieverbrauch, der zusammen mit der Hauptanlage mit mechanischer Brüdenkompression entsteht, beträchtlich gesenkt werden. Andererseits ergibt sich durch die Zusatzverdampfung bei Eindampfkristallisationsanlagen durch diese zusätzlich Verdampfung eventuell in Zusammenhang mit der sinkenden Salzlöslichkeit aufgrund der niedrigen Temperatur eine zusätzlich Salzausbeute, und zwar ohne zusätzliche Energiekosten. Dadurch wird die Wirtschaftlichkeit des erfindungsgemäßen Verfahrens und der erfindungsgemäßen Anlage beträchtlich erhöht.

Nach einer weiterhin bevorzugten Ausführungsform wird die zu entspannende beziehungsweise entspannte Lösung in einer Entspannungsstufe oder in zwei oder mehr Entspannungsstufen oder insbesondere in allen Entspannungsstufen im Kreislauf umgewälzt. Dadurch kann eine spontane Entspannung durch die Abkühlung im Vakuum vermieden werden. Zusätzlich kann im Falle einer Salzausscheidung auch die Bildung von Feinsalz verhindert werden, worauf nachstehend im Rahmen der Beispiele noch näher eingegangen wird.

Bei der Umwälzung beziehungsweise Zirkulation der zu entspannenden/entspannten Lösung in einer Entspannungsstufe wird diese vorzugsweise durch einen Heizkörper, in dem die Lösung mit dem Brüdendampf der vorhergehenden Entspannungsstufe erhitzt wird und durch einen Entspannungsverdampfer, in dem eine Entspannung erfolgt, im Kreislauf geführt. Wird diesem Kreislauf vor der Entspannungsstufe eine Lösungsmenge, die aus der vorhergehenden Entspannungsstufe stammt, zugeführt, dann wird natürlich eine entsprechende Lösungsmenge nach der Entspannungsstufe aus dem Kreislauf abgeführt und entweder dem nächsten Kreislauf zugeführt oder endgültig "verarbeitet", worauf in den Beispielen näher eingegangen wird.

Nach einer weiteren bevorzugten Ausführungsform wird der aus einer Entspannungsstufe stammende Brüdendampf teilweise zur Vorerwärmung der Frischlösung für die Hauptanlage eingesetzt. Der aus einer Entspannungsstufe stammende Brüdendampf kann somit nicht nur zur Erwärmung in der nächsten Entspannungsstufe, sondern auch zur Vorerwärmung der Frischlösung dienen.

Vorzugsweise wird heiße Mutterlösung aus der Hauptanlage in eine, zwei, drei oder mehr Entspannungsstufen zugeführt. Dadurch ist es möglich, in der letzten Entspannungsstufe eine definierte Austrittskonzentration zu erhalten beziehungsweise einzustellen und im Falle von Kristallisationsanlagen den Ausfall von unerwünschten Nebensalzen zu verhindern.

Es ist erfindungsgemäß und vorzugsweise ebenfalls möglich, in eine oder mehrere Entspannungsstufen kalte Frischlösung zuzuspeisen, um die gewünschte definierte Austrittskonzentration aus der letzten Entspannungsstufe einzustellen und in Kristallisationsanlagen den Ausfall von unerwünschten Nebensalzen zu verhindern. Die Steuerung der Zuführung von kalter Frischlösung und/oder heißer Mutterlösung hängt von den Parametern ab, bei denen das erfindungsgemäße Verfahren durchgeführt wird.

Nach einer weiteren bevorzugten Ausführungsform wird im Fall des Einsatzes von kalter Frischlösung der in mindestens einer Entspannungsstufe erhaltene Brüdendampf zumindest teilweise zum Erhitzen dieser kalten Frischlösung eingesetzt. Dadurch ergibt sich gegenüber dem Einsatz von kalter Frischlösung eine höhere Gesamteindampfungsleistung beim erfindungsgemäßen Verfahren beziehungsweise in der erfindungsgemäßen Anlage.

Bei der erfindungsgemäßen Anlage, die zur Durchführung des erfindungsgemäßen Verfahrens dient, sind mehrere Entspannungsverdampfer derart in Reihe geschaltet, dass der aus einem vorhergehenden Entspannungsverdampfer stammende Brüdendampf in einen Heizkörper geführt wird, der zum Erwärmen der in einem nachgeschalteten Entspannungsverdampfer zu entspannenden Lösung dient. Dies gilt zweckmäßigerweise ab dem ersten bis zum vorletzten Entspannungsverdampfer. Da sich an den letzten Entspannungsverdampfer kein weiterer Entspannungsverdampfer anschließt, kann der im letzten Entspannungsverdampfer entstehende Brüdendampf auch nicht in einem nachgeschalteten Verdampfer eingesetzt werden. Im letzten Entspannungsverdampfer erfolgt vielmehr eine Behandlung der in dem nachstehenden Beispiel beschriebenen Art.

Die Erfindung wird im folgenden anhand der Zeichnungen näher erläutert, welche eine schematische Funktionsdarstellung einer erfindungsgemäßen Anlage wiedergeben. Von den Zeichnungen zeigen im Einzelnen
- Figur 1: die Entspannungsstufen 1, 2 und 3 und

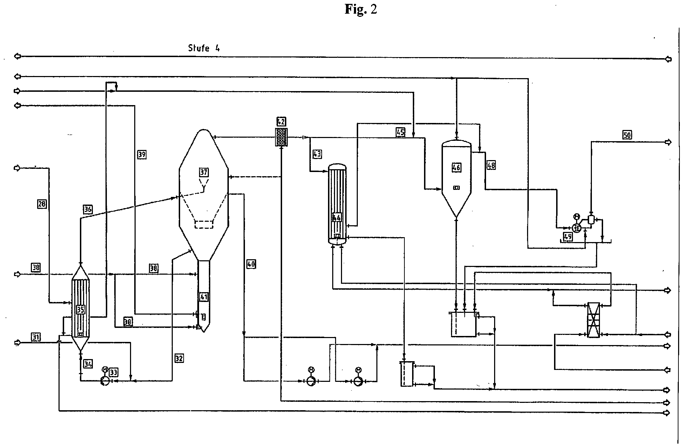

- Figur 2: die Entspannungsstufe 4.

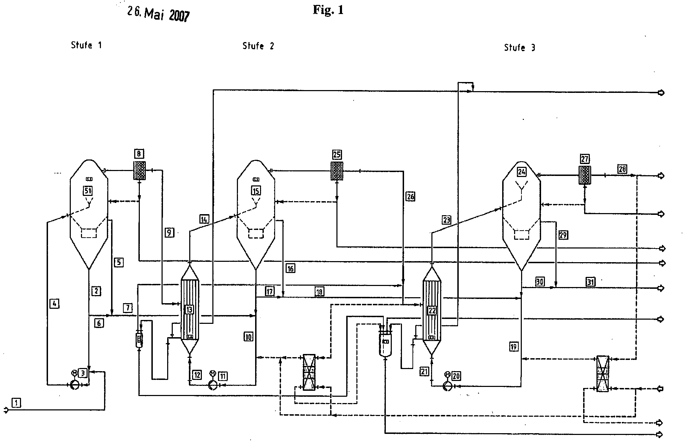

Das erfindungsgemäße Verfahren und die erfindungsgemäße Anlage wird nachstehend anhand der Verarbeitung/Behandlung einer heißen Mutterlösung erläutert, die aus einer Kristallisationsanlage mit mechanischer Brüdenkompression (Hauptanlage) stammt. Diese heiße Mutterlösung tritt aus dieser Hauptanlage in einer Menge von ca 100 m³/h aus und wird über eine Rohrleitung 1 (man vergleiche Figur 1 Stufe 1) in die erste Entspannungsstufe geleitet. In dieser Entspannungsstufe wird über eine Umwälzleitung 2, eine Umwälzpumpe 3 und eine Umwälzleitung 4 Lösung umgewälzt, um eine spontane Entspannung durch die Abkühlung im Vakuum zu vermeiden und durch Erhalt einer definierten Temperaturerhöhung zwischen der Leitung 4 und 2 im 1. Entspannungsverdampfer 51 die für den Prozess notwendige Verdampfungsverhältnisse zu erhalten. Dadurch soll im Falle einer Salzausscheidung auch die Bildung von Feinsalz verhindert werden, da bei der Abkühlung und durch die Verdampfung im 1. Entspannungsbehälter 51 die Löslichkeit der über die Leitung 4 eintretenden gesättigten Lösung überschritten wird, wobei weiteres Salz, beispielsweise Natriumchlorid, ausfällt.

Der 1. Entspannungsverdampfer 51 wird bei einer Temperatur von ca. 100 ° Celsius betrieben. Bei diesen Bedingungen entsteht im 1. Entspannungsverdampfer 51 eine Brüdendampfmenge von ca. ca 5,18 t/h. Um im 1. Entspannungsverdampfer 51 die für das Kristallwachstum notwendige Kristallkonzentration zu erhalten, ist dieser mit einem Klarlösungsabzug 5 und einem Dicklösungsabzug 6 ausgestattet, der die Ablauflösung aus dieser 1. Enstpannungsstufe über die Rohrleitung 7 in die Umwälzleitung 10 der 2. Entspannungsstufe führt.

In der 2. Entspannungsstufe zirkuliert die Lösung über eine Umwälzleitung 10, eine Umwälzpumpe 11, eine Rohrleitung 12, einen Heizkörper 13, eine Rohrleitung 14 und den 2. Entspannungsverdampfer 15. Der im 1. Entspannungsverdampfer 51 freiwerdenden Brüdendampf gelangt über einen Demister 8 und eine Rohrleitung 9 in den Heizkörper 13 der 2. Entspannungsstufe und sorgt hier für eine Zusatzverdampfung, sodass im 2. Entspannungsverdampfer 15 der 2. Entspannungsstufe eine Brüdendampfmenge von ca. 7,4 t/h entsteht.

Der 2. Entspannungsverdampfer 15 wird bei einer Temperatur von ca. 84 ° Celsius betrieben. Über eine Dünnlösungsleitung 16 und eine Dicklösungsleitung 17 sowie eine Sammelleitung 18 gelangt die Lösung dann in eine Umwälzleitung 19 der 3. Entspannungsstufe, die bei einer Temperatur von ca. 66 ° Celsius arbeitet.

Auch in der 3. Entspannungsstufe wird die Lösung in einem Heizkreislauf geführt. Dieser Heizkreislauf ist aus einer Umwälzleitung 19, einer Umwälzpumpe 20, einer Umwälzleitung 21, einem Heizkörper 22 und einer Umwälzleitung 23 aufgebaut, sodass die Lösung über den 3. Entspannungsverdampfer 24 zirkuliert. Der im 2. Entspannungsverdampfer 15/ Entspannungsbehälter 15 der 2. Entspannungsstufe entstehende Brüdendampf gelangt über einen Demister 25 und eine Brüdenrohrleitung 26 in den Heizkörper 22 und sorgt somit in der 3. Entspannungsstufe für eine Zusatzverdampfung (außer der durch die Entspannung der in der Rohrleitung 13 eintretenden ohnehin frei werdenden Entspannungsdampfungsenergie). Hierdurch entsteht im 3. Entspannungsverdampfer 24 eine Brüdendampfmenge von ca. 10t/h.

Das aus dem 3. Entspannungsverdampfer 24 ablaufende Salz-LösungsGemisch gelangt über Rohrleitungen 29, 30 und 31 in eine Umwälzleitung 32 der 4. Entspannungsstufe. Auch hier zirkuliert die Lösung wieder über die Umwälzleitung 32, eine Pumpe 33, eine Umwälzleitung 34, einen Heizkörper 35 und eine Umwälzleitung 36, um im 4. Entspannungsverdampfer 37 definierte Verhältnisse zu erhalten.

Der im 3. Entspannungsverdampfer 24 der 3. Entspannungsstufe frei werdenden Brüdendampf gelangt über den Demister 27 und eine Rohrleitung 28 in einen Heizkörper 35. In der 4. Entspannungsstufe wird dabei bei einer Temperatur von 45 ° Celsius gearbeitet, wodurch in dieser 4. Stufe durch Entspannung der Lösung aus dem 2. Entspannungsverdampfer und Zuführung von Brüdendampf Energie im Heizkörper 35 eine Verdampfungsmenge von ca. 12,6 t/h resultiert.

Der 4. Entspannungsverdampfer 37 ist mit einem Salzsack 41 versehen, in dem das gesamte in der Anlage stehende Salz durch Frischlösung (Rohrleitung 38) gewaschen und die Temperatur des in der Rohrleitung 39 austretenden Salzbreies eingestellt wird.

Die Klarlösung verlässt über einer Rohrleitung 40 den 4. Entspannungsverdampfer 37. Der in diesem 4. Entspannungsverdampfer 37 frei werdenden Brüdendampf gelangt über einen Demister 42 und eine Rohrleitung 43 teilweise in einen Vorwärmer 44, in den die in der vorgeschalteten Eindampfkristallisation mit mechanischer Brüdenkompression (Hauptanlage) notwendige Frischlösung vorgewärmt wird und teilweise über eine Rohrleitung 45 in einen Mischkondensator 46, in dem der Überschussbrüden durch Kühlwasser niedergeschlagen wird. Die Entlüftung der Anlage geschieht über eine Entlüftungsleitung 48 zu einer Vakuumpumpe 49, die die in die Anlage eintretende Luft sowie die eintretenden Gase aus Atmosphärenspannung in einer Rohrleitung 50 verdichtet.

### Bezugszeichenliste

- 1: Rohrleitung
- 2: Umwälzleitung
- 3: Umwälzpumpe
- 4: Umwälzleitung
- 5: Klarlösungsabzug
- 6: Dicklösungsabzug
- 7: Rohrleitung
- 8: Demister
- 9: Rohrleitung
- 10: Umwälzleitung
- 11: Umwälzpumpe
- 12: Rohrleitung
- 13: Heizkörper
- 14: Rohrleitung
- 15: 2. Entspannungsverdampfer
- 16: Dünnlösungsleitung
- 17: Dicklösungsleitung
- 18: Sammelleitung
- 19: Umwälzleitung
- 20: Umwälzpumpe
- 21: Umwälzleitung
- 22: Heizkörper
- 23: Umwälzleitung
- 24: 3. Entspannungsverdampfer
- 25: Demister
- 26: Brüdenrohrleitung
- 27: Demister
- 28: Rohrleitung
- 29: Rohrleitung
- 30: Rohrleitung
- 31: Rohrleitung
- 32: Umwälzleitung
- 33: Pumpe
- 34: Umwälzleitung
- 35: Heizkörper
- 36: Umwälzleitung
- 37: 4. Entspannungsverdampfer
- 38: Rohrleitung
- 39: Rohrleitung
- 40: Rohrleitung
- 41: Salzsack
- 42: Demister
- 43: Rohrleitung
- 44: Vorwärmer
- 45: Rohrleitung
- 46: Mischkondensator
- 48: Entlüftungsleitung
- 49: Vakuumpumpe
- 50: Rohrleitung
- 51: 1. Entspannungsverdampfer

## Patentansprüche

1. Verfahren zum Eindampfen und/oder zum Abkühlen der aus einer Hauptanlage in Form einer Eindampfanlage oder Eindampfkristallisationsanlage mit mechanischer Brüdenkompression ablaufenden heißen Mutterlösung, bei dem die heiße Mutterlösung entspannt wird,
**dadurch gekennzeichnet, dass**
die Entspannung in mehreren Stufen erfolgt und der in mindestens einer Entspannungsstufe erhaltene Brüdendampf zumindest teilweise zum Heizen derjenigen Lösung eingesetzt wird, die in der sich anschließenden Entspannungsstufe entspannt wird.

2. Verfahren nach Anspruch 1,
**dadurch gekennzeichnet, dass**
der ab der ersten Entspannungsstufe bis zur vorletzten Entspannungsstufe erhaltene Brüdendampf jeweils zumindest teilweise zum Heizen derjenigen Lösung eingesetzt wird, die in der sich anschließenden Entspannungsstufe entspannt wird.

3. Verfahren nach Anspruch 1 oder 2,
**dadurch gekennzeichnet, dass**
die Lösung in einer Entspannungsstufe oder in zwei oder mehr oder in allen Entspannungsstufen im Kreislauf umgewälzt wird.

4. Verfahren nach Anspruch 3,
**dadurch gekennzeichnet, dass**
die Lösung bei der Umwälzung durch einen Heizkörper, in dem die Lösung mit dem Brüdendampf der vorhergehenden Entspannungsstufe erhitzt wird, und durch einen Entspannungsverdampfer, in dem eine Entspannung erfolgt, im Kreislauf geführt wird.

5. Verfahren nach einem der vorhergehenden Ansprüche,
**dadurch gekennzeichnet, dass**
der aus einer Entspannungsstufe stammende Brüdendampf zumindest teilweise zur Vorerwärmung der Frischlösung für die Hauptanlage eingesetzt wird.

6. Verfahren nach einem der vorhergehenden Ansprüche,
**dadurch gekennzeichnet, dass**
heiße Mutterlösung aus der Hauptanlage in eine, zwei, drei oder mehr Entspannungsstufen zugeführt wird.

7. Verfahren nach einem der Ansprüche 1 bis 5,
**dadurch gekennzeichnet, dass**
kalte Frischlösung in eine, zwei, drei oder mehr Entspannungsstufen zugeführt wird.

8. Verfahren nach Anspruch 7,
**dadurch gekennzeichnet, dass**
der in mindestens einer Entspannungsstufe erhaltene Brüdendampf und insbesondere der in der letzten Entspannungsstufe erhaltene Brüdendampf zumindest teilweise zum Erhitzen der Frischlösung eingesetzt wird.

9. Verfahren nach einem der vorhergehenden Ansprüche,
**dadurch gekennzeichnet, dass**
es insgesamt vier Entspannungsstufen umfasst.

10. Anlage zur Durchführung des Verfahrens nach einem der vorhergehenden Ansprüche mit einem Entspannungsverdampfer (51, 15, 24, 37)
**gekennzeichnet durch**
mehrere Entspannungsverdampfer (51, 15, 24, 37), die in Reihe geschaltet sind und
Heizkörper (13, 22, 35) zum Erwärmen der in einem nachgeschalteten Entspannungsverdampfers (15, 24, 37) zu entspannenden Lösung mittels des aus einem vorhergehenden Entspannungsverdampfer (51, 15, 24) stammenden Brüdendampfes

## Claims

1. Method for evaporating and/or cooling the hot mother solution flowing out of a main installation, in the form of an evaporation installation or evaporative crystallization installation with mechanical vapour compression, in which method the hot mother solution is expanded,
**characterized in that**
the expansion occurs in multiple stages, and the vapour obtained in at least one expansion stage is used at least partially for heating that solution which is expanded in the subsequent expansion stage.

2. Method according to Claim 1,
**characterized in that**
the vapour obtained from the first expansion stage to the last-but-one expansion stage is in each case used at least partially for heating that solution which is expanded in the subsequent expansion stage.

3. Method according to Claim 1 or 2,
**characterized in that**
the solution is circulated in a circuit in one expansion stage, or in two or more or in all the expansion stages.

4. Method according to Claim 3,
**characterized in that**,
during the circulation through a heating body, in which the solution is heated by the vapour of the previous expansion stage, and through a flash evaporator, in which an expansion occurs, the solution is conducted in a circuit.

5. Method according to one of the preceding claims,
**characterized in that**
the vapour originating from an expansion stage is used at least partially for pre-heating the fresh solution for the main installation.

6. Method according to one of the preceding claims,
**characterized in that**
hot mother solution is fed into one, two, three or more expansion stages from the main installation.

7. Method according to one of Claims 1 to 5,
**characterized in that**
cold fresh solution is fed into one, two, three or more expansion stages.

8. Method according to Claim 7,
**characterized in that**
the vapour obtained in at least one expansion stage, and in particular the vapour obtained in the last expansion stage, is used at least partially for heating the fresh solution.

9. Method according to one of the preceding claims,
**characterized in that**
it involves four expansion stages in total.

10. Installation for carrying out the method according to one of the preceding claims with a flash evaporator (51, 15, 24, 37),
**characterized by**
multiple flash evaporators (51, 15, 24, 37), which are connected in series, and
heating bodies (13, 22, 35) for heating by means of the vapour originating from a previous flash evaporator (51, 15, 24) the solution to be expanded in a flash evaporator (15, 24, 37) connected downstream.

## Revendications

1. Procédé d'évaporation et/ou de refroidissement de la solution mère chaude s'écoulant hors d'une installation principale sous la forme d'une installation d'évaporation ou d'une installation de cristallisation par évaporation avec compression mécanique de buée, dans lequel la solution mère chaude est détendue, **caractérisé en ce que** la détente est effectuée en plusieurs étapes et la buée d'évaporation obtenue dans au moins une étape de détente est utilisée au moins en partie pour chauffer la solution qui est détendue dans l'étape de détente qui suit.

2. Procédé selon la revendication 1, **caractérisé en ce que** la buée d'évaporation obtenue depuis la première étape de détente jusqu'à l'avant-dernière étape de détente est utilisé à chaque fois au moins en partie pour le chauffage de la solution qui est détendue dans l'étape de détente qui suit.

3. Procédé selon la revendication 1 ou 2, **caractérisé en ce que** l'on fait circuler la solution en circuit dans une étape de détente ou dans deux étapes de détente ou plus ou dans toutes les étapes de détente.

4. Procédé selon la revendication 3, **caractérisé en ce que** la solution est guidée en circuit lors de la circulation à travers un corps chauffant, dans lequel la solution est chauffée avec la buée d'évaporation de l'étape de détente précédente, et à travers un évaporateur de détente, dans lequel une détente est effectuée.

5. Procédé selon l'une quelconque des revendications précédentes, **caractérisé en ce que** la buée d'évaporation provenant d'une étape de détente est utilisée au moins en partie pour le préchauffage de la solution fraîche destinée à l'installation principale.

6. Procédé selon l'une quelconque des revendications précédentes, **caractérisé en ce qu'**une solution chaude provenant de l'installation principale est alimentée dans une, deux, trois étape(s) de détente ou davantage.

7. Procédé selon l'une quelconque des revendications 1 à 5, **caractérisé en ce qu'**une solution fraîche froide est alimentée dans une, deux, trois étape(s) de détente ou davantage.

8. Procédé selon la revendication 7, **caractérisé en ce que** la buée d'évaporation obtenue dans au moins une étape de détente et en particulier la buée d'évaporation obtenue dans la dernière étape de détente est utilisée au moins en partie pour le chauffage de la solution fraîche.

9. Procédé selon l'une quelconque des revendications précédentes, **caractérisé en ce qu'**il comprend au total quatre étapes de détente.

10. Installation pour la mise en oeuvre du procédé selon l'une quelconque des revendications précédentes avec un évaporateur de détente (51, 15, 24, 37), **caractérisée par** plusieurs évaporateurs de détente (51, 15, 24, 37) qui sont montés en série et plusieurs corps chauffants (13, 22, 35) pour le chauffage de la solution à détendre dans un évaporateur de détente suivant (15, 24, 37) au moyen de la buée d'évaporation provenant d'un évaporateur de détente précédent (51, 15, 24).
